# EUROPÄISCHE PATENTSCHRIFT

(11) **EP 1 580 073 B1**
(45) Veröffentlichungstag und Bekanntmachung des Hinweises auf die Patenterteilung: **05.11.2008**
(21) Anmeldenummer: 05003349.7
(22) Anmeldetag: 17.02.2005
(51) Int. Cl.: B60P 7/13

(54) **Verriegelungsanordnung zur Festlegung von Containern auf Lastfahrzeugen**
Locking device for fixing containers on vehicles
Dispositif de verrouillage pour conteneurs sur un véhicule

(30) Priorität: 22.03.2004 DE 102004014321
(43) Veröffentlichungstag der Anmeldung: 28.09.2005
(73) Patentinhaber: Schmitz Gotha Fahrzeugwerke GmbH, 99867 Gotha (DE)
(72) Erfinder: Koch, Josef, 89081 Ulm (DE)
(74) Vertreter: Weber, Gerhard

(56) Entgegenhaltungen:
- DE-A1- 2 049 927
- DE-A1- 2 209 804
- DE-A1- 2 305 001
- DE-A1- 2 443 554
- DE-A1- 19 603 817
- DE-U- 7 135 647
- DE-U1- 8 522 360

## Beschreibung

Die Erfindung betrifft eine Verriegelungsanordnung zur Festlegung von Containern auf Lastfahrzeugen mit einem mittels einer Spannmutter spannbaren Riegelzapfen.

Eine typische Verriegelungsanordnung vom twist-lock-Typ für Container auf Lastfahrzeugen greift mit einem Riegelkopf eines Riegelzapfens von unten in einen Containerbeschlag und ist zwischen einer Verriegelungsposition und einer Freigabeposition um eine vertikale Achse um 90° verdrehbar. Zusätzlich kann vorgesehen sein, dass mittels einer über ein Gewinde auf dem Schaft des Riegelzapfens drehbar gehaltenen Spannmutter der Riegelzapfen nach unten gegen das Verriegelungsgehäuse verspannt werden kann und dabei über den Riegelkopf den Containerbeschlag nach unten gegen eine Auflagefläche drückt.

Die Spannmutter ist entlang ihres Umfangs radial strukturiert und weist typischerweise eine Sternform auf. Um zu verhindern, dass sich durch die Erschütterungen im Fahrbetrieb die Spannmutter losdrehen und die Verriegelung lösen kann, sind Sicherungsmittel in Form von Fallsicherungen gebräuchlich. In der EP 0 934 848 A2 ist z. B. eine Riegelfalle mit einem auf einem horizontalen Bolzen durch sein Eigengewicht in einer Sicherungsposition formschlüssig gehaltener Riegel vorgesehen, welcher durch Anheben und Verschwenken um den Bolzen aus dem Eingriff in die Struktur der Spannmutter gelöst und in eine Freigabestellung gebracht werden kann. Die DE 85 22 360 U1 sieht eine so genannte Nasenfalle vor, bei welcher ein auf einem tangential zur Drehachse der Spannmutter verlaufenden Stift gelagerter, besonders geformter Sicherungsriegel aus einer Sicherungsposition nach außen geschwenkt werden kann.

Die gattungsbildende DE 22 09 804 beschreibt Verriegelungseinrichtungen nach Art der Twist-Locks mit einer unterhalb eines Verriegelungsgehäuses befindlichen, um einen Gewindeschaft eines Riegelbolzens drehbaren Spannmutter und Sperrelementen zur Sicherung der Spannmutter. Sperrelemente können in einer ersten Ausführung als federnd gelagerte, parallel zur Achse des Riegelbolzens verschiebbare Rastelemente ausgeführt sein, welche in Vertiefungen des Verriegelungsgehäuses oder der Oberseite der Spannmutter einrasten können. In anderer Ausführung ist ein Sperrelement als formschlüssige Sperre in Form eines Drehbolzens vorgesehen, welcher um eine zur Achse des Riegelbolzens parallele Schwenkachse im Verriegelungsgehäuse zwischen einer Sperrstellung und einer Lösestellung schwenkbar ist und in der Sperrstellung mit einem Riegelnocken ein Verdrehen der Spannmutter verhindert. Der Drehbolzen ist in der Sperrstellung durch einen Anschlag am Gehäuse gegen Verdrehung gesichert und muss zum Verschwenken in die Lösestellung über dem Anschlag angehoben werden.

Die DE 20 49 927 beschreibt die Sicherung einer Twist-Lock-Spannmutter mittels eines Sicherungshebels, welcher zwischen einer Lösestellung mit horizontaler Ausrichtung und einer Sperrstellung mit vertikaler Ausrichtung verschwenkbar ist und in der Sperrstellung zwischen Speichen der Spannmutter eingreift und ein Verdrehen der Spannmutter verhindert. Der Sicherungshebel ist in der Sperrstellung entgegen der öffnenden Drehrichtung der Spannmutter an einem Anschlag abgestützt.

Der vorliegenden Erfindung liegt die Aufgabe zugrunde, für eine mittels einer Spannmutter spannbaren twist-lock-Veniegelung eine vorteilhafte Sicherungseinrichtung gegen unbeabsichtigtes Lösen anzugeben, welche sich durch einen einfachen Aufbau auszeichnet.

Die Erfindung ist im Patentanspruch 1 beschrieben. Die abhängigen Ansprüche enthalten vorteilhafte Ausgestaltungen und Weiterbildungen der Erfindung.

Die Verschwenkbarkeit eines Sicherungselements aus der Sperrstellung in Richtung der Lösestellung nach oder unter Überwindung einer schwerkraftunabhängigen Rückstellkraft, welche durch elastische Verformung eines Federelements aufgebracht und von einem Benutzer manuell werkzeuglos überwindbar ist, verbindet eine einfache Bedienbarkeit durch eine Schwenkbewegung mit einer hohen Sicherheit gegen unbeabsichtigtes Ausschwenken des Sicherungselements aus der Sperrstellung. Die Rückstellkraft wirkt vorzugsweise rückschwenkend, d. h. also rückdrehend um die Schwenkachse. Die aus der elastischen Verformung des Federelements entstehende Federkraft kann an sich beliebig gerichtet und in ein Drehmoment um die Schwenkachse als eine rückschwenkende Kraft umgesetzt sein. Bevorzugt ist eine Ausführung, bei welcher die Rückstellkraft während der Schwenkbewegung überwunden wird. Der Benutzer führt dabei vorteilhafterweise nur eine Schwenkbewegung des Sicherungselements aus und überwindet dabei, vorzugsweise nur in einem Teilabschnitt der Schwenkbewegung, die Rückstellkraft. Das elastisch verformbare Federelement kann an sich beliebige Form aufweisen. Das Federelement ist vorzugsweise metallisch. Das Federelement kann insbesondere auch durch ein elastisch verformbares Sperrelement selbst und/oder durch einen Teil des Schwenklagers gegeben sein. Als Sperrelement sei allgemein ein Element angegeben, welches in seiner Sperrstellung in die Umfangsstruktur der Spannmutter eingreift und dieser einen Widerstand gegen lösendes Verdrehen entgegensetzt.

Die Rückstellkraft wirkt vorzugsweise lediglich über einen Teil der Schwenkbewegung des Sperrelements, so dass dieses nach Überwindung der Rückstellkraft mit spürbar geringerer Kraft in die Lösestellung weiter verschwenkbar ist oder auch unter zumindest teilweiser Entspannung des Federelements selbst in die Freigabestellung strebt.

Das Sperrelement kann in seiner Lösestellung formschlüssig und/oder kraftschlüssig gehalten sein. Die Rückschwenkung des Sperrelements aus der Lösestellung in die Sperrstellung kann wiederum unter elastischer Verformung des Federelements und Überwindung einer entsprechenden Rückstellkraft als Haltekraft erfolgen. In anderer Ausführung kann die Haltekraft des Sperrelements in der Lösestellung auch nur durch Reibschluss gegeben sein und die Rückschwenkung auch nur entgegen einer Reibungskraft ohne Zunahme, gegebenenfalls auch unter Verringerung der elastischen Verformung des Federelements erfolgen, wobei die Reibungskraft u. U. auch allein durch Erschütterungen im Fahrbetrieb überwunden werden kann, so dass ein versehentlich nicht zurückgeschwenktes Sperrelement nach und nach im Fahrbetrieb selbsttätig in die Sperrstellung zurückschwenkt.

Die Ausbildung eines Schwenklagers für ein schwenkbares Sperrelement durch eine Lagerplatte, welche an einer Gehäuseplatte des Verriegelungsgehäuses angeordnet und befestigt ist, ist besonders vorteilhaft. Die Schwenkachse verläuft vorteilhafterweise parallel zu der Gehäuseplatte und kann dicht an diese gelegt werden, so dass das Schwenklager nur sehr wenig über die Gehäuseplatte übersteht. Insbesondere bei Anordnung der Lagerplatte an der Unterseite einer der Spannmutter vertikal gegenüberstehenden unteren Gehäuseplatte kann erreicht werden, dass die Schwenklageranordnung nur eine sehr geringe Höhe, vorteilhafterweise weniger als 35 mm, vorzugsweise weniger als 25 mm, insbesondere weniger als 20 mm zwischen Spannmutter und Gehäuseplatte einnimmt. Durch die Befestigung der Lagerplatte an der Unterseite einer Gehäuseplatte ist das Schwenklager gegen Beschädigung gut geschützt. In anderer vorteilhafter Ausführung kann die Lagerplatte an einer seitlichen Gehäuseplatte befestigt sein und die Schwenklageranordnung seitlich außerhalb des Verriegelungsgehäuses liegen. Die Gehäuseplatte kann auch Teil eines Querträgerholms eines Fahrzeugs sein. Dies ist günstig hinsichtlich der typischerweise angestrebten kleinvolumigen Bauform solcher Containerverriegelungen. Die Spannmutter kann vertikal dicht an die Gehäuseplatte gelegt werden.

Die Ausbildung des Schwenklagers durch eine an der Gehäuseplatte befestigte Lagerplatte, welche vorzugsweise durch Fügeelemente, wie Niete, Schrauben etc., befestigt wird, ist von besonderem Vorteil auch hinsichtlich der korrosionsschützenden Beschichtung des Verriegelungsgehäuses, z. B. durch Verzinken oder ähnliches, mit nachträglicher Befestigung der Lagerplatte.

Die Lagerplatte bildet ein Schwenklager vorteilhafterweise in Form zweier in Richtung der Schwenkachse beabstandeter Teillager. Die Lagerplatte kann unter elastischer Verspannung an der Gehäuseplatte anliegen. Die Teillager können an einer einstückigen Platte über einen Mittelabschnitt fest verbunden sein oder an zwei getrennten und separat mit der Gehäuseplatte verbundenen Teillagerplatten ausgebildet sein.

Das Sperrelement ist vorteilhafterweise in sich elastisch verformbar und bruchfest. Hierdurch kann vermieden werden, dass z. B. bei durchaus gebräuchlicher Kraftanwendung durch Hammerschläge auf die Spannmutter zum Lösen bei nicht zuvor in die Freigabestellung verschwenktem Sperrelement dieses zerstört wird. Das Sperrelement ist hingegen in der Sperrstellung hinreichend formstabil um ein lösendes Drehen der Spannmutter im Fahrbetrieb zuverlässig zu verhindern.

Von besonderem Vorteil ist die Ausführung eines Sperrelements als eine von der Schwenkachse weg weisende Schleife, vorzugsweise mit einem in der Sperrstellung nach unten über die Spannmutter hinausragendem Griffbügel. Die Schleife kann vorteilhafterweise in Richtung parallel zur Schwenkachse elastisch vorgespannt sein und selbst als Federelement für die aus der Sperrstellung zu überwindende Rückstellkraft dienen.

Das Sperrelement besteht in bevorzugter Ausführung aus einem gebogenen Stabmaterial, insbesondere einem gebogenen Rundmaterial, dessen beide Enden zugleich als Zapfen in zwei beabstandeten Teillagern des Schwenklagers einliegen.

Die Erfindung ist nachfolgend anhand bevorzugter Ausführungsbeispiele unter Bezugnahme auf die Abbildungen noch eingehend veranschaulicht. Dabei zeigt:
- Fig. 1: eine twist-lock-Verriegelung mit gesperrter Spannmutter,
- Fig. 2: eine zu Fig. 1 um 90° gedrehte Seitenansicht,
- Fig. 3: eine Ansicht zu Fig. 1 von unten,
- Fig. 4: eine Ansicht analog Fig. 2 mit dem Sperrelement in Freigabestellung,
- Fig. 5: eine Schrägansicht einer Lagerplatte,
- Fig. 6: eine Variation zu Fig. 5,
- Fig. 7: ein Verriegelungsgehäuse mit einer seitlich an einem Schwenklagergehäuse befestigten Lagerplatte,
- Fig. 8: eine Abwandlung zu Fig. 7,
- Fig. 9: eine Schwenklageranordnung mit zwei Teillagerplatten,
- Fig. 10: ein Schwenklager mit einem nicht rundem Lagerzapfen,
- Fig. 11: ein weiteres Schwenklager mit nicht rundem Lagerzapfen.

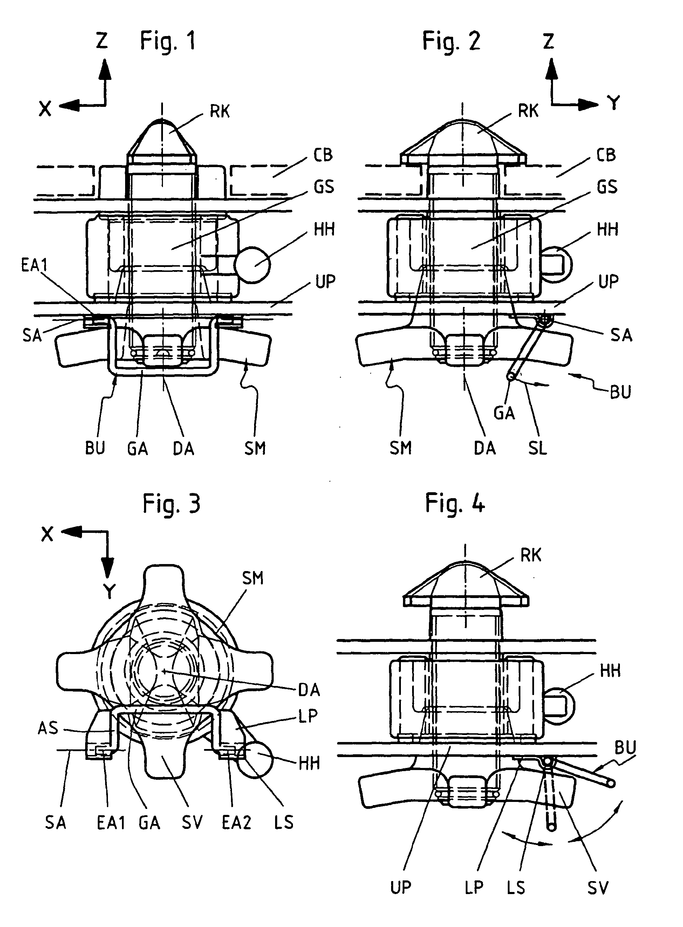

In Fig. 1 bis Fig. 4 ist eine an sich bekannte und gebräuchliche Verriegelungsanordnung des spannbaren twist-lock-Typs für Container in unterschiedlichen Ansichten skizziert. Zur Veranschaulichung ist ein rechtwinkliges x, y, z-Koordinatensystem gewählt und mit eingezeichnet. Derartige Verriegelungsanordnungen enthalten insbesondere einen Riegelzapfen mit einem Riegelkopf RK und einem Gewindeschaft GS. Der Riegelzapfen ist in einem Verriegelungsgehäuse um eine vertikale, d. h. zur eingezeichneten z-Richtung parallelen Drehachse DA mittels eines Handhebels HH manuell um ca. 90° verdrehbar zwischen einer skizzierten Verriegelungsstellung, in welcher der Container auf dem Fahrzeug unverlierbar gehalten ist, und einer Freigabestellung, in welcher ein Container nach oben abhebbar bzw. von oben aufsetzbar ist. In der skizzierten Verriegelungsstellung übergreift ein Teil des Riegelkopfes einen Containerbeschlag CB.

Der Riegelzapfen ist mittels einer auf dem Gewindeschaft geführten Spannmutter SM, welche von Hand um die Drehachse DA drehbar ist, nach unten gegen das Verriegelungsgehäuse bzw. ein in diesem abgestütztes Bauteil verspannbar. Im skizzierten Beispiel ragt die Spannmutter mit einem konischen Abschnitt durch eine untere Platte UP des Verriegelungsgehäuses hindurch. Die Spannmutter kann, wie in anderen gebräuchlichen Ausführungen, auch an einer Gehäuseplatte abgestützt sein. Der Handhebel HH oder eine funktional vergleichbare Vorrichtung zur Drehung des Verriegelungszapfens kann auch unterhalb der Spannmutter liegen.

Bekannt ist ferner, das ungewollte Drehen der Spannmutter, was z. B. durch Rüttelbewegungen im Fahrbetrieb veranlasst sein kann, durch Sicherungsmittel mit einer Schwerkraft-Fallsicherung, wie z. B. im einleitend erwähnten Stand der Technik, zu verhindern. Die Spannmutter ist in Umfangsrichtung radial durch Vorsprünge und Einzüge stark strukturiert und zeigt typischerweise die aus Fig. 3 anschaulich ersichtliche Vierfach-Sternform. Ein Sperrelement der Sicherungsmittel liegt in der Sperrstellung innerhalb des maximalen Radius der Spannmutter in einem der radialen Einzüge zwischen zwei benachbarten Vorsprüngen SV der Sternform. Bei lösendem Drehen der Spannmutter, z. B. unter Einwirkung von Erschütterungen im Fahrbetrieb legt sich eine Kante eines solchen Vorsprungs SV an das Sperrelement und stützt sich gegen weiteres Verdrehen an diesem ab.

Bei der bevorzugten Ausführungsform der Erfindung gemäß Fig. 1 bis Fig. 4 ist das Sicherungselement durch einen zu einer Schleife gebogenen Bügel aus einem Stabmaterial, insbesondere einem Rundmaterial gebildet, welcher in einem Schwenklager um eine horizontale Schwenkachse SA zwischen einer in Fig. 1 bis Fig. 3 skizzierten Sperrstellung und einer in fig. 4 skizzierten Lösestellung manuell verschwenkar ist. In der Sperrstellung liegt der Bügel im wesentlichen unterhalb, in der Lösestellung im wesentlichen in y-Richtung seitlich von der Fahrzeugmitte weg von der Schwenkachse SA. Die Schwenkbewegung aus der Sperrstellung in die Lösestellung erfolgt damit seitlich nach außen und nach oben.

Der schleifenförmige Bügel ist mit seinem der Schwenkachse abgewandten und zu dieser überwiegend parallelen, eventuell auch gekrümmten Griffabschnitt GA von einem Benutzer leicht zu greifen. In der Sperrstellung liegt vorzugsweise ein Vorsprung SV der Spannmutter innerhalb der Schleife des Bügels. Der Griffabschnitt GA liegt in der Sperrstellung vorteilhafterweise unterhalb der Spannmutter und kann in der Lösestellung vorteilhafterweise seitlich in y-Richtung über das Verriegelungsgehäuse hinausragen. In anderer nicht skizzierter Ausführung kann die Anordnung auch um ca. 90° gedreht sein.

Mit in Richtung der Schwenkachse entgegengesetzten Endabschnitten EA1, EA2 bildet der Bügel vorteilhafterweise zwei in Richtung der Schwenkachse beabstandete Lagerzapfen einer Schwenklageranordnung. Die Schwenklagerzapfen verlaufen vorteilhafterweise im wesentlichen parallel zur Schwenkachse und können aufeinander zu oder voneinander weg gerichtet sein. Einer der den Griffabschnitt mit den Endabschnitten verbindenden Bügelschenkel dient als Anlageschenkel AS zur Abstützung eines Vorsprungs SV der Spannmutter gegen lösendes Verdrehen. Vorteilhafterweise ist der Bügel derart in der Schwenklageranordnung gelagert, dass die abstützende Kraft bei Anlage des Vorsprungs der Spannmutter an dem Anlageschenkel den achsialen Eingriff des zugehörigen Endabschnitts EA1 in die Schwenklageranordnung verstärkt. Ein bei Einwirkung einer solchen abstützenden Kraft auf dem Bügel als Sperrelement wirkende Drehmoment wird durch den vorteilhaft in Richtung der Schwenkachse beabstandeten Lagerzapfen EA2 leicht abgefangen. Entsprechendes gilt auch noch für eine gelegentlich auftretende Situation, in welcher ein Benutzer vergisst, das Sperrelement aus der Sperrstellung in die Lösestellung zu verlagern und mit großer Kraft, z. B. auch mit Einsatz von Werkzeug, auf die Spannmutter lösend einwirkt. Vorteilhafterweise ist das Sperrelement in geringem Umfang elastisch verformbar, so dass in derartigen Situationen selbst unter Verwendung eines Schlagwerkzeugs der Bügelschenkel AS elastisch nachgeben kann, ohne zu brechen. Zugleich weist das Sperrelement aber eine hinreichende Formstabilität auf, um im regulären Betrieb zur Verhinderung unbeabsichtigten Lösens der Spannmutter Abstützkräfte zuverlässig abzufangen. Derartige Eigenschaften sind vorteilhafterweise bei Ausführung des Bügels aus gebogenem Stahlstabmaterial leicht zu erreichen. Eine begrenzte Elastizität des Bügelmaterials kann auch vorteilhaft dazu verwandt werden, dem Bügel eine elastische Verformung mit Vorspannung in Richtung der Schwenkachse innerhalb der Schwenklageranordnung vorzugeben. Ferner kann die elastische Verformbarkeit vorteilhaft für ein verbessertes Sichern des Bügels n der Sperrstellung ausgenutzt werden.

Zur Bildung der Lagerbuchsen der Schwenklageranordnung wird vorteilhafterweise eine separate Lagerplatte LP von unten an der der Spannmutter vertikal zugewandten unteren Gehäuseplatte UP des Verriegelungsgehäuses befestigt. Die Befestigung erfolgt vorzugsweise mittels Befestigungselementen, wie Schrauben, Nieten, Bolzen, insbesondere lösbaren Befestigungselementen. Die Lagerplatte wird vorteilhafterweise an der Platte des Verriegelungsgehäuses befestigt, nachdem das Verriegelungsgehäuse mit einer Oberflächenbeschichtung, insbesondere einer Korrosionsschutzschicht versehen ist.

Die Lagerplatte bildet vorzugsweise wenigstens einen Teil der Lagerbuchsen der Schwenklageranordnung. In der skizzierten Ausführungsform sind die Lagerbuchsen nach oben durch die untere Platte UP des Verriegelungsgehäuses und nach unten durch an der Lagerplatte ausgebildete, nach oben offene Lagerschalen LS begrenzt. Die Gehäuseplatte UP ist dadurch als ebene Platte ohne besondere Schwenklagervorrichtungen besonders vorteilhaft. Durch die Verlagerung der Schwenklageranordnung an die Unterseite der unteren Platte UP kann die Bauhöhe der Schwenklageranordnung zwischen unterer Platte UP und der Spannmutter SM besonders gering, vorteilhafterweise geringer als 35 mm, vorzugsweise weniger als 25 mm, insbesondere weniger als 20 mm gehalten und die Spannmutter in geringem vertikalen Abstand zu der unteren Gehäuseplatte angeordnet werden.

Die Lagerplatte kann vorteilhafterweise durch Umformen eines ebenen Blechzuschnitts und damit besonders günstig hergestellt werden. Die Lagerplatte ist vorteilhafterweise einstückig ausgeführt. In dem skizzierten bevorzugten Ausführungsbeispiel sind die Lagerschalen für die beiden in Richtung der Schwenklagerachse beabstandeten Teillager der Schwenklageranordnung über ein Mittelteil der Lagerplatte fest verbunden. In anderer Ausführung können die beiden Lagerschalen auch an zwei getrennten Teillagerplatten ausgebildet sein, welche separat einzeln an der Gehäuseplatte befestigt sind.

Vorteilhafterweise ist das Sperrelement, im bevorzugten skizzierten Beispiel also der Bügel BU, aus der Sperrstellung nach Fig. 1 nur durch Überwindung schwerkraftunabhängigen Rückstellkraft eines elastisch verformbaren Elements aus der Sperrstellung in Richtung der Lösestellung verschwenkbar. Das rückschwenkende Moment der Rückstellkraft ist dabei wesentlich größer als ein Moment aus dem Gewicht des Sperrelements selbst. Das rückschwenkende Moment tritt vorzugsweise nur über einen kleineren Winkelabschnitt von weniger als 30°, vorzugsweise weniger als 15°, der Schwenkbewegung nennenswert in Erscheinung und ist vom Benutzer manuell werkzeuglos überwindbar. Vorzugsweise greift die Rückstellkraft im Bereich der Schwenklageranordnung in geringem Abstand von der Schwenkachse an. Besonders vorteilhaft an der skizzierten Ausführung ist, dass die Überwindung der Rückstellkraft im Verlauf der Schwenkbewegung des Sperrelements und der Benutzer daher keine gesonderte zusätzliche Bewegung ausführen muss.

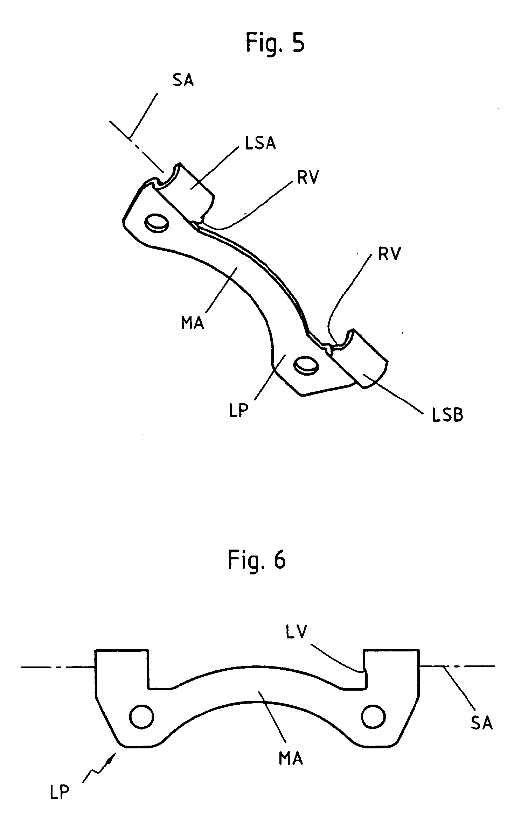

Das elastische Element ist vorzugsweise das Sperrelement in Form des im Schwenklager elastisch vorgespannten Bügels selbst. Der Bügel liegt mit seinen seitlichen Schenkeln unter der elastischen Vorspannung an den in achsialer Richtung der Schwenkachse nach innen weisenden Kanten der Lagerschalen der Lagerplatte an. Diese Kanten verlaufen nicht vollständig in einer zur Schwenkachse senkrechten Querebene, sondern weisen für die Schwenkbewegung des Bügels aus der Sperrstellung in dem genannten Winkelabschnitt einen verringerten Abstand durch einen Vorsprung der Kanten aufeinander zu auf. Ein bevorzugtes Ausführungsbeispiel einer Lagerplatte ist in Fig. 5 in Schrägansicht von unten skizziert. Die Abstandsverringerung der Kanten ist hier durch je einen Rastvorsprung RV an den Kanten beider Lagerschalen erreicht. Zur Überwindung der Rastvorsprünge muss der bereits elastisch vorgespannte Bügel weiter elastisch verengt werden. Der Bügel ist der Übersichtlichkeit halber in Fig. 5 nicht mit eingezeichnet. In Verbindung mit einem runden Querschnitt der Bügelschenkel ist die Höhe der Rastnasen vorzugsweise geringer als der halbe Radius des Querschnitts. Der Rastvorsprung kann auch eine Anlaufschräge mit über einen größeren Winkelabschnitt allmählich verringertem Abstand zwischen den Flanken der Lagerschalen aufweisen.

Im Beispiel nach Fig. 5 weitet sich der Abstand zwischen den einander zugewandten Kanten der beabstandeten Lagerschalen LSA; LSB bei weiterer Verschwenkung des Bügels in Richtung dessen Lösestellung wieder. Beim Zurückschwenken des Bügels aus der Lösestellung in Richtung der Sperrstellung muss daher wieder die Kraft zur elastischen Verengung des Bügels bei der Überwindung der Rastvorsprünge RV aufgewandt werden. Der Kraftaufwand und Kraftverlauf ist dabei für die Löseverschwenkung und die Sperrverschwenkung im wesentlichen gleich. Die Bügelstellung mit maximaler Verformung des Bügels ist in Fig. 4 mit unterbrochener Linie angedeutet.

In anderer Ausführung nach Fig. 6 ist zwar wieder eine Verringerung des Kantenabstandes bei der Bügelverschwenkung aus der Sperrstellung in Richtung der Lösestellung in Form eines Vorsprungs LV vorgesehen, bei weiterer Verschwenkung in die Sperrstellung verläuft die Kante der Lagerschale aber so, dass sich der Abstand der gegenüberstehenden Kanten nicht wieder erweitert, sondern im wesentlichen gleich bleibt oder sich in geringem Maß sogar weiter verringert. Der Bügel ist dann in der Lösestellung nur durch Reibschluss des Bügelschenkels mit der Kante der Lagerschale gehalten und zur Rückverlagerung des Bügels in die Sperrstellung ist nur die Reibungskraft zu überwinden. Hierdurch kann bei Abstimmung der Reibungskräfte mit der Kantengeometrie u. U. auch erreicht werden, dass ein vor Fahrtantritt versehentlich nicht in die Sperrstellung zurück geschwenkter Bügel unter Einwirkung der Erschütterungen im Fahrbetrieb sich nach und nach selbst in die Sperrstellung zurück bewegt. In dem Beispiel nach Fig. 6 ist ferner veranschaulicht, dass der Vorsprung, welcher ein im Betrieb sicheres Verbleiben des Sperrelements in der Sperrstellung gewährleistet, nur an einer der Kanten der beiden Lagerschalen vorgesehen ist und die andere Kante über den Schwenkwinkel gleichmäßig verläuft.

Die Lagerschalen können in vorteilhafter Ausführung auch vollständig um die Achse geschlossen sein und unabhängig von einer Platte des Verriegelungsgehäuses die Lagerbuchsen bilden. Dies ist insbesondere dahingehend von Vorteil, dass kein Kontakt, insbesondere kein Reibungskontakt zwischen Lagerzapfen des Sperrelements und einer korrosionsgeschützten Platte des Verriegelungsgehäuses auftritt und die Korrosionsschicht nicht zerstört wird. Die Lagerschalen können vorteilhafterweise unter elastischer Verspannung der Lagerplatten über die Befestigungselemente BE an die Platte UP gedrückt sein. Der Mittelabschnitt MA der Lagerplatte LP ist der Drehachse DA zugewandt gekrümmt geschnitten und kann dadurch eng an der Spannmutter angeordnet sein.

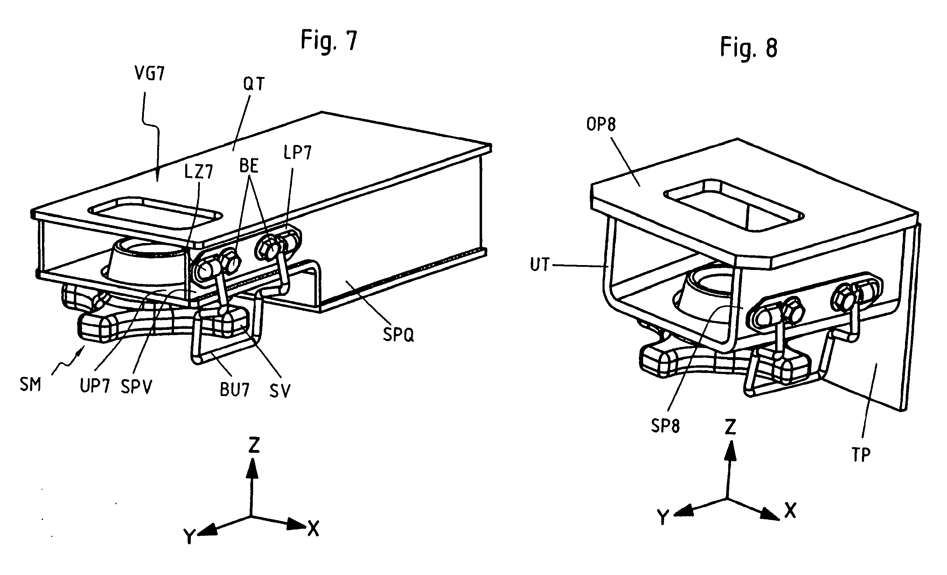

Fig. 7 zeigt in Schrägansicht eine Ausführungsform mit besonders flachem Verriegelungsgehäuse am Ende eines Querträgers QT eines Fahrzeugs. Das Verriegelungsgehäuse VG7, zu dessen Übersichtlichkeit der Veriegelungszapfen nicht mit eingezeichnet ist, ist dabei teilweise durch fortgesetzte Platten des Querträgers selbst gebildet und nach unten durch eine zusätzliche untere Platte UP7 abgeschlossen. Eine Lagerplatte LP7 ist mittels Schrauben als Befestigungselementen BE an einer seitlichen Platte SPV des Verriegelungsgehäuses, welche einstückig als Fortsatz einer Seitenplatte SPQ des Querträgers ausgeführt ist, befestigt. Die Schwenklageranordnung liegt hier seitlich außerhalb des von Verriegelungsgehäuse und Spannmutter eingenommenen Raums. Die Schwenkachse verläuft parallel zu der Fläche der Seitenplatte SPV bzw. SPQ in y-Richtung. Die Schwenklagerbuchsen sind in diesem Beispiel vollständig in der Lagerplatte LP7 ausgebildet, so das die Lagerzapfen LZ7 des als Sperrelement eingesetzten gebogenen Drahtbügels BU7 sich nur an Flächen der Lagerplatte LP7 abstützen und reiben, nicht hingegen an vorzugsweise mit einer Korrosionsschutzschicht versehenen Seitenplatte.

Der Bügel BU7 ist im Verlauf seiner Seitenschenkel zweifach abgewinkelt und ragt dadurch unter der unteren Platte UP7 in den Drehraum der Spannmutter ein und verhindert zuverlässig deren unbeabsichtigtes Verdrehen.

In Fig. 8 ist ein Verriegelungsgehäuse VG8 skizziert, welches an einer vertikalen Tragplatte TP8 befestigt ist oder eine solche zur Befestigung an einem Fahrzeug aufweist. Das Verriegelungsgehäuse ist durch eine obere Platte OP8 und ein U-förmig gebogenes Unterteil UT gebildet. An einer Seitenplatte SP8 des Unterteils ist in zu Fig. 7 entsprechender Weise eine Schwenklageranordnung mit einem Bügel als Sperrelement befestigt.

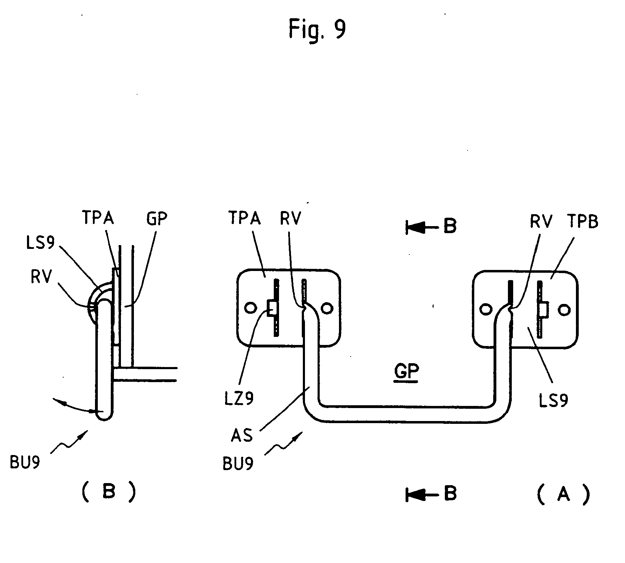

Fig. 9 zeigt mit Blickrichtung auf eine Gehäuseplatte GP (Fig. 9A) und in Richtung der Schwenkachse (Fig. 9B) entsprechend B-B von Fig. 9A eine Variante einer Schwenklageranordnung, bei welcher wie in Fig. 7 und Fig. 8 die Lagerbuchsen vollständig durch die Lagerplatte selbst gebildet sind, indem z. B. die Lagerzapfen LZ9 in Richtung der Schwenkachse über die Lagerschalen LS9 hinausragen. Die Lagerzapfen LZ9 des Bügels BU9 kommen nicht in Kontakt mit der Gehäuseplatte GP. Die Lagerschalen weisen an ihren den Seitenschenkeln des Bügels BU9 wieder Rastvorsprünge RV auf.

Die Lagerplatte ist im Beispiel nach Fig. 9 aufgeteilt in zwei Teillagerplatten TPA, TPB, welche jede für sich in definierter gegenseitiger Position auf einer Gehäuseplatte GP befestigt werden. Die Teillagerplatten sind vorzugsweise identisch aufgebaut. Der Bügel BU9 sei in der skizzierten Sperrstellung, in welcher in diesem Beispiel die Seitenschenkel des Bügels im wesentlichen parallel zu der Gehäuseplatte liegen, wieder in Richtung der Schwenkachse SA elastisch vorgespannt.

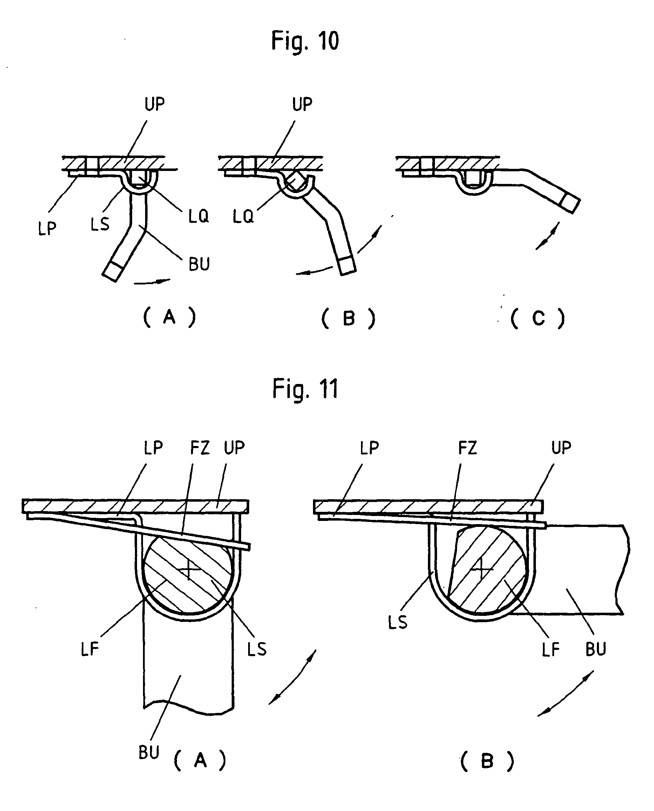

Während in den Beispielen nach Fig. 5 bis Fig. 9 die elastische Rückstellkraft für das zu überwindende Rückschwenkmoment des Bügels durch elastische Verformung des Bügels selbst aufgebracht wird, kann nach Fig. 10 oder Fig. 11 ein nicht runder Querschnitt der Lagerzapfen in Verbindung mit einer quer zur Schwenkachse wirkenden elastischen Rückstellkraft zur Sicherung des Sperrelements in der Sperrstellung dienen.

Im Beispiel nach Fig. 10 ist ein eckiger, insbesondere gleichmäßig polygoner, z. B. quadratischer oder sechseckiger Stabquerschnitt des Bügels vorgesehen. Die Lagerschale ist nach unten im wesentlichen halbkreisförmig gekrümmt. Eine ebene Fläche des Lagerzapfens LQ liegt vorteilhafterweise unter leichter elastischer Spannung der Lagerplatte an der unteren Platte UP des Verriegelungsgehäuses an. Bei der Verschwenkung des Sperrelements um die Drehachse aus der in Fig. 10 (A) skizzierten Sperrstellung in Richtung der Lösestellung stellt sich der quadratische Querschnitt mit einer Ecke an der Fläche der unteren Platte auf und drückt die elastisch nachgebende Lagerschale nach unten (Fig. 10 (B)). In der Lösestellung nach Fig. 10 (C) liegt wieder eine ebene Fläche des Lagerzapfens an der unteren Platte an. Für die Verschwenkung in beide Richtungen muss im wesentlichen dieselbe Kraft zur elastischen Verformung der Lagerplatte überwunden werden.

Bei dem Beispiel nach Fig. 11 ist der Lagerzapfen LF gegen einen runden Querschnitt einseitig abgeflacht und liegt in der in Fig. 11A skizzierten Sperrstellung mit dem flachen Querschnitt an einer Gegenfläche einer vorgespannten Federzunge FZ an. Bei Verschwenkung aus der Sperrstellung in Richtung der Lösestellung wird die vorzugsweise elastisch vorgespannte Federzunge durch weitere elastische Verformung nach oben gedrückt. Bei der weiteren Verschwenkung des Sperrelements in die Lösestellung bleibt die elastische Verlagerung der Sperrzunge nach oben erhalten und es treten für die weitere Verschwenkung und die Rückverschwenkung nur die Reibungskräfte des Lagerzapfens gegen die Federzunge und die untere Platte UP auf. Die Federzunge verhindert zugleich, das der Lagerzapfen LF in Kontakt mit der Gehäuseplatte UP kommt. In der Lösestellung ist das Sperrelement nur reibschlüssig gehalten. Dabei kann u. U. wieder der Effekt der automatischen Rückstellung unter Einwirkung von Erschütterungen im Fahrbetrieb auftreten.

Die Anordnung des Schwenklagers an einer Platte des Verriegelungsgehäuses und/oder die Sicherung des Sperrelements durch eine Rückstellkraft eines elastisch verformbaren Elements sind insbesondere auch vorteilhaft bei einer Verriegelungsanordnung mit entnehmbaren, höhenverstellbaren oder verschwenkbaren Verriegelungsgehäuse in einer fahrzeugfesten Halterung.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere können weitere Variante elastisch verformbarer Elemente zur Aufbringung einer Rückstellkraft eingesetzt sein, beispielsweise Schenkelfedern, deren Rückstellkraft in der Lösestellung durch eine ausreichende Haltekraft, z.B. durch einen Rastvorsprung, kompensiert sind. Für die Form des Sperrelements, insbesondere auch in dessen Ausführung aus gebogenem Stabmaterial, sind viele Formen denkbar, welche nicht notwendigerweise die einen Vorsprung der Spannmutter umgreifende offene Schleifenform aufzuweisen brauchen. Es kann auch vorgesehen sein, dass zuerst eine Rückstellkraft überwunden und danach erst die Bewegung, insbesondere Schwenkbewegung des Sperrelements aus der Sperrstellung in Richtung der Lösestellung ermöglicht ist und ausgeführt wird.

## Patentansprüche

1. Verriegelungsanordnung zur Festlegung von Containern auf Lastfahrzeugen mit einem Riegelzapfen, welcher einen zum Eingriff in einem Containerbeschlag ausgebildeten Riegelkopf (RK) und einem darunter angeordneten Gewindeschaft (GS) aufweist, mit einer den Gewindeschaft umgreifenden Spannmutter (SM) und mit Sicherungseinrichtungen, welche ein in einem Schwenklager schwenkbares Sperrelement enthalten, das in einer Sperrstellung ein Lösen der Spannmutter verhindert und manuell in eine Lösestellung schwenkbar ist, **dadurch gekennzeichnet, dass** das schwenkbare Sperrelement (BU) nach oder unter Überwindung einer manuell werkzeuglos von einem Benutzer überwindbaren, schwerkraftunabhängigen Rückstellkraft eines elastisch verformbaren Elements von der Sperrstellung in Richtung der Lösestellung verschwenkbar ist und eine Bügelschleife bildet, die einen Griffabschnitt aufweist, der in der Sperrstellung unterhalb der Spannmutter liegt.

2. Anordnung nach Anspruch 1, **dadurch gekennzeichnet, dass** das elastisch verformbare Element durch das Sperrelement selbst gegeben ist.

3. Anordnung nach Anspruch 1, **dadurch gekennzeichnet, dass** das elastische Element durch ein Teil eines Schwenklagers für das Sperrelement gebildet ist.

4. Anordnung nach einem der Ansprüche 1 bis 3, **dadurch gekennzeichnet, dass** das Sperrelement durch eine von einem Benutzer manuell überwindbare Haltekraft in der Lösestellung gehalten ist.

5. Anordnung nach Anspruch 4, **dadurch gekennzeichnet, dass** die Haltekraft durch Reibschluss des Sperrelements aufgebracht ist.

6. Anordnung nach Anspruch 4 oder 5, **dadurch gekennzeichnet, dass** die Haltekraft durch eine Rückstellkraft eines elastisch verformbaren Elements gebildet ist.

7. Anordnung nach einem der Ansprüche 1 bis 6, **dadurch gekennzeichnet, dass** die Bügelschleife in der Sperrstellung in Richtung der Schwenkachse elastisch vorgespannt ist.

8. Anordnung nach einem der Ansprüche 1 bis 7, **dadurch gekennzeichnet, dass** das Sperrelement (BU) aus einem gebogenen Stabmaterial gebildet ist.

9. Anordnung nach einem der Ansprüche 1 bis 8, **dadurch gekennzeichnet, dass** bei der Schwenkbewegung wenigstens ein Bügelschenkel (AS) an einem Vorsprung (RL, LV) einer Führungsfläche entlang gleitet und an dem Vorsprung elastisch verformt wird:

10. Anordnung nach Anspruch 9, **dadurch gekennzeichnet, dass** der Vorsprung eine Rastnase (RV) bildet.

11. Anordnung nach einem der Ansprüche 1 bis 10, **dadurch gekennzeichnet, dass** das Schwenklager zwei in Richtung der Schwenkachse (SA) beabstandete Teillager aufweist.

12. Anordnung nach einem der Ansprüche 1 bis 11, **dadurch gekennzeichnet, dass** das Schwenklager für das Sperrelement zumindest teilweise durch eine an einer Gehäuseplatte (UP) eines Verriegelungsgehäuses angeordnete und an der Gehäuseplatte befestigte Lagerplatte (LP) gebildet ist.

13. Anordnung nach Anspruch 12, **dadurch gekennzeichnet, dass** das Schwenklager durch eine Lagerschale (LSA, LSB) der Lagerplatte (LP) und die Gehäuseplatte (UP) gebildet ist.

14. Anordnung nach Anspruch 12 oder 13, **dadurch gekennzeichnet, dass** die Lagerplatte (LP) mittels Befestigungselementen an der Gehäuseplatte befestigt ist.

15. Anordnung nach einem der Ansprüche 12 bis 14, **dadurch gekennzeichnet, dass** die Gehäuseplatte mit einer Korrosionsschutzschicht versehen ist.

16. Anordnung nach einem der Ansprüche 12 bis 15, **dadurch gekennzeichnet, dass** die Gehäuseplatte der Spannmutter vertikal gegenüber steht und dass die Unterkante der Schwenklageranordnung von der Gehäuseplatte in Richtung der Spannmutter um maximal 35 mm, insbesondere maximal 25 mm beabstandet ist.

17. Anordnung nach einem der Ansprüche 12 bis 16, **dadurch gekennzeichnet, dass** die Lagerplatte an einer seitlichen, insbesondere im wesentlichen vertikalen Gehäuseplatte befestigt ist.

18. Anordnung nach einem der Ansprüche 12 bis 17, **dadurch gekennzeichnet, dass** die Lagerplatte zwei separat an der Gehäuseplatte befestigte Teillagerplatten umfasst.

19. Anordnung nach einem der Ansprüche 12 bis 18, **dadurch gekennzeichnet, dass** das Verriegelungsgehäuse innerhalb einer Halterung höhenverstellbar und/oder verschwenkbar ist.

20. Anordnung nach einem der Ansprüche 1 bis 19, **dadurch gekennzeichnet, dass** ein das Lösen der Spannmutter (SM) verhinderndes Sperrelement (BU) der Sicherungseinrichtungen bruchfest und in Öffnungsrichtung der Spannmutter begrenzt elastisch nachgebend ausgebildet und/oder in einem Schwenklager elastisch nachgebend gelagert ist.

## Claims

1. Locking arrangement for fixing containers on lorries, having a locking journal which has a locking head (RK) which is formed for engagement in a container fitting and a threaded shank (GS) which is arranged underneath, having a clamping nut (SM) which engages around the threaded shank and having securing devices which comprise a locking element which can be pivoted in a pivoting bearing, prevents the clamping nut from being released in a locked position and can be pivoted manually into a release position, **characterized in that** the pivotable locking element (BU) can be pivoted from the locked position in the direction of the release position after or while overcoming a restoring force of an elastically deformable element, which restoring force can be overcome manually by a user without tools and is independent of gravity, and the said locking element (BU) forms a bracket loop which has a grip section which lies below the clamping nut in the locked position.

2. Arrangement according to Claim 1, **characterized in that** the elastically deformable element is provided by the locking element itself.

3. Arrangement according to Claim 1, **characterized in that** the elastic element is formed by a part of a pivoting bearing for the locking element.

4. Arrangement according to one of Claims 1 to 3, **characterized in that** the locking element is held in the release position by a holding force which can be overcome manually by a user.

5. Arrangement according to Claim 4, **characterized in that** the holding force is applied by a frictional connection of the locking element.

6. Arrangement according to Claim 4 or 5, **characterized in that** the holding force is formed by a restoring force of an elastically deformable element.

7. Arrangement according to one of Claims 1 to 6, **characterized in that** the bracket loop is prestressed elastically in the direction of the pivot axis in the locked position.

8. Arrangement according to one of Claims 1 to 7, **characterized in that** the locking element (BU) is formed from a bent rod material.

9. Arrangement according to one of Claims 1 to 8, **characterized in that**, during the pivoting movement, at least one bracket loop (AS) slides along on a projection (RL, LV) of a guide face and is deformed elastically on the projection.

10. Arrangement according to Claim 9, **characterized in that** the projection forms a latching lug (RV).

11. Arrangement according to one of Claims 1 to 10, **characterized in that** the pivoting bearing has two part bearings which are spaced apart in the direction of the pivot axis (SA).

12. Arrangement according to one of Claims 1 to 11, **characterized in that** the pivoting bearing for the locking element is formed at least partially by a bearing plate (LP) which is arranged on a housing plate (UP) of a locking housing and is fastened to the housing plate.

13. Arrangement according to Claim 12, **characterized in that** the pivoting bearing is formed by a bearing shell (LSA, LSB) of the bearing plate (LP) and by the housing plate (UP).

14. Arrangement according to Claim 12 or 13, **characterized in that** the bearing plate (LP) is fastened to the housing plate by means of fastening elements.

15. Arrangement according to one of Claims 12 to 14, **characterized in that** the housing plate is provided with an anti-corrosion layer.

16. Arrangement according to one of Claims 12 to 15, **characterized in that** the housing plate stands vertically opposite the clamping nut, and **in that** the lower edge of the pivoting-bearing arrangement is spaced apart from the housing plate in the direction of the clamping nut by a maximum of 35 mm, in particular a maximum of 25 mm.

17. Arrangement according to one of Claims 12 to 16, **characterized in that** the bearing plate is fastened to a lateral, in particular substantially vertical housing plate.

18. Arrangement according to one of Claims 12 to 17, **characterized in that** the bearing plate comprises two part bearing plates which are fastened separately to the housing plate.

19. Arrangement according to one of Claims 12 to 18, **characterized in that** the locking housing is height-adjustable and/or pivotable within a holding device.

20. Arrangement according to one of Claims 1 to 19, **characterized in that** a locking element (BU) of the securing devices which prevents release of the clamping nut (SM) is configured to be break-proof and elastically yielding to a limited extent in the opening direction of the clamping nut and/or is mounted in an elastically yielding manner in a pivoting bearing.

## Revendications

1. Système de verrouillage destiné à immobiliser des conteneurs sur des véhicules utilitaires, lequel système présente un tourillon de verrou doté d'une tête de verrou (RK) configurée pour s'engager dans une ferrure du conteneur et d'une tige filetée (GS) disposée en dessous de la tête, un écrou de serrage (SM) qui chevauche la tige filetée et des dispositifs de sécurité qui contiennent un élément de blocage qui peut pivoter dans un palier pivotant et qui, en position de blocage, empêche la libération de l'écrou de serrage et peut être pivoté manuellement dans une position de libération,
**caractérisé en ce que**
après ou pendant qu'un utilisateur surmonte manuellement et sans outil la force de rappel surmontable, indépendant de la gravité, d'un élément élastiquement déformable, l'élément pivotant de blocage (BU) peut pivoter depuis la position de blocage en direction de la position de libération et forme une boucle d'étrier qui présente une partie de saisie qui, en position de blocage, est située en dessous de l'écrou de serrage.

2. Système selon la revendication 1, **caractérisé en ce que** l'élément élastiquement déformable est constitué de l'élément de blocage proprement dit.

3. Système selon la revendication 1, **caractérisé en ce que** l'élément élastique est formé par une partie d'un palier de pivotement de l'élément de blocage.

4. Système selon l'une des revendications 1 à 3, **caractérisé en ce que** l'élément de blocage est maintenu dans sa position de libération par une force de maintien qui peut être surmontée manuellement par un utilisateur.

5. Système selon la revendication 4, **caractérisé en ce que** la force de maintien est appliquée sur l'élément de blocage par frottement.

6. Système selon les revendications 4 ou 5, **caractérisé en ce que** la force de maintien est formée par une force de rappel d'un élément élastiquement déformable.

7. Système selon l'une des revendications 1 à 6, **caractérisé en ce que** la boucle en étrier est précontrainte élastiquement en direction de l'axe de pivotement dans la position de blocage.

8. Système selon l'une des revendications 1 à 7, **caractérisé en ce que** l'élément de blocage (BU) est formé d'un matériau en barre cintrée.

9. Système selon l'une des revendications 1 à 8, **caractérisé en ce que** lors du déplacement de pivotement, au moins une branche (AS) de l'étrier coulisse le long d'une saillie (RL, LV) d'une surface de guidage et est déformée élastiquement sur la saillie.

10. Système selon la revendication 9, **caractérisé en ce que** la saillie forme un bec d'encliquetage (RV).

11. Système selon l'une des revendications 1 à 10, **caractérisé en ce que** le palier de pivotement présente deux parties de palier distantes l'une de l'autre dans la direction de l'axe de pivotement (SA).

12. Système selon l'une des revendications 1 à 11, **caractérisé en ce que** le palier de pivotement de l'élément de blocage est formé au moins en partie par une plaque de montage (LP) disposée sur une plaque (UP) d'un boîtier de verrouillage et fixée sur la plaque de boîtier.

13. Système selon la revendication 12, **caractérisé en ce que** le palier de pivotement est formé par une coquille de palier (LSA, LSB) de la plaque de palier (LP) et la plaque de boîtier (UP).

14. Système selon l'une des revendications 12 ou 13, **caractérisé en ce que** la plaque de palier (LP) est fixée sur la plaque de boîtier au moyen d'éléments de fixation.

15. Système selon l'une des revendications 12 à 14, **caractérisé en ce que** la plaque de boîtier est dotée d'une couche de protection contre la corrosion.

16. Système selon l'une des revendications 12 à 15, **caractérisé en ce que** la plaque de boîtier est située face à l'écrou de serrage dans la direction verticale et **en ce que** le bord inférieur du système de palier de pivotement est situé à une distance de la plaque de boîtier d'au plus 35 mm et en particulier d'au plus 25 mm en direction de l'écrou de serrage.

17. Système selon l'une des revendications 12 à 16, **caractérisé en ce que** la plaque de palier est fixée sur une plaque latérale de boîtier, en particulier essentiellement verticale.

18. Système selon l'une des revendications 12 à 17, **caractérisé en ce que** la plaque de palier comprend deux parties de plaque de palier fixées séparément sur la plaque de boîtier.

19. Système selon l'une des revendications 12 à 18, **caractérisé en ce que** le boîtier de verrouillage est ajustable en hauteur et/ou peut pivoter à l'intérieur d'un support.

20. Système selon l'une des revendications 1 à 19, **caractérisé en ce qu'**un élément de blocage (BU) des dispositifs de sécurité qui empêche la libération de l'écrou de serrage (SM) résiste à la rupture et est configuré de manière à se déformer élastiquement de manière limitée dans la direction d'ouverture de l'écrou de serrage et/ou est monté de manière élastiquement déformable ou dans un palier de pivotement.
